# DEMANDE DE BREVET EUROPEEN

(11) **EP 0 623 760 A1**
(43) Date de publication de la demande: **09.11.1994**
(21) Numéro de dépôt: 94400952.1
(22) Date de dépôt: 03.05.1994
(51) Int. Cl.: F16C 1/22, F16C 1/18, F16D 13/75

(54) **Dispositif de réglage automatique pour câble de commande**

(30) Priorité: 04.05.1993 FR 9305279
(71) Demandeur: SYSTEMES B L G, F-60730 Ste Geneviève (FR)
(72) Inventeur: Vachard, Laurent, F-60820 Boran (FR); Vicogne, Sylvain, F-60370 Berthecourt (FR)
(74) Mandataire: Schrimpf, Robert

(57) **Abrégé**

L'invention concerne un dispositif de réglage automatique pour câble de commande comprenant une gaine extérieure de câble (G) et une âme intérieure (A) pouvant coulisser à l'intérieur de ladite gaine. L'âme est reliée à l'une de ses extrémités à un organe actionneur (P) à l'autre extrémité à un organe récepteur (R) que l'on désire commander à distance.

La gaine est fixée à ses extrémités au bâti, et le dispositif comporte :
- un support (1; 101a, 101b) solidaire de l'un des organes,
- une came (3 ; 103) destinée à l'accrochage d'une extrémité de l'âme intérieure du câble et reliée à rotation audit support, avec une possibilité réduite de déplacement en rotation dans le sens d'une traction de l'âme intérieure du câble,
- des moyens de rappel élastiques (4; 104) agissant sur la came (3 ; 103) pour exercer un couple de rappel tendant à rappeler en rotation la came dans le sens d'une traction sur l'âme intérieure du câble, la came (3 ; 103) étant apte à se déplacer en rotation contre la réaction desdits moyens de rappel élastiques (4 ; 104) sous l'effet d'une traction exercée sur l'âme intérieure du câble lors du réglage en vue de faire correspondre la course en déplacement des deux organes.

## Description

La présente invention concerne le domaine des câbles de commande comprenant une gaine extérieure de câble à fixer à ses extrémités à un bâti et une âme intérieure apte à coulisser à l'intérieur de la gaine, à relier à une extrémité à un organe actionneur (par exemple un levier de pédale d'accélérateur d'un véhicule automobile) monté à déplacement par rapport au bâti et à l'autre extrémité à un dispositif récepteur monté à déplacement par rapport au bâti et que l'on désire commander à distance (par exemple un mécanisme commandant l'admission des gaz). L'invention concerne plus particulièrement un dispositif de réglage permettant, lors de la pose d'un câble de commande ou lors d'opérations d'entretien, d'ajuster la longueur de l'âme intérieure s'étendant entre l'organe actionneur et l'organe récepteur de manière à faire correspondre la course en déplacement de l'un avec celle de l'autre.

On a proposé pour ce faire de fixer la gaine à une extrémité au bâti et de relier à déplacement la gaine à l'autre extrémité à ce dernier au moyen d'un manchon prolongeant la gaine, apte à se déplacer avec frottement dans un perçage du bâti. Une traction suffisante exercée lors du réglage sur l'âme intérieure du câble se traduit, par réaction, en un déplacement du manchon dans le perçage, entraînant une modification de la longueur d'âme intérieure s'étendant hors de la gaine et du manchon et permet de faire correspondre la course en déplacement de l'organe actionneur avec celle de l'organe récepteur. La gaine comporte habituellement une armature constituée par un ressort dont les spires ont tendance à s'écarter lorsque la gaine décrit des courbes serrées entre ses deux extrémités fixées au bâti. Lors du réglage, les spires se rapprochent élastiquement sous l'effet des efforts parcourant la gaine et accumulent de l'énergie élastique qui est ensuite restituée brutalement lors du déplacement du manchon, rendant ainsi difficile l'obtention d'un réglage précis. Par ailleurs, le manchon doit être verrouillé manuellement en position dans le perçage après réglage par la pose d'une agrafe.

La présente invention a pour objet principal un dispositif de réglage automatique permettant de faire correspondre, lors de la pose du câble ou lors d'opérations d'entretien, la course en déplacement de l'organe actionneur avec celle de l'organe récepteur, d'une façon précise et entièrement automatique.

La présente invention y parvient par le fait que le dispositif de réglage automatique comporte:
- un support solidaire de l'un des organes,
- une came destinée à l'accrochage d'une extrémité de l'âme intérieure du câble et reliée à rotation audit support avec une possibilité réduite de déplacement en rotation dans le sens d'une traction de l'âme intérieure du câble,
- des moyens de rappel élastiques agissant sur la came pour exercer un couple de rappel tendant à rappeler en rotation la came dans le sens d'une traction sur l'âme intérieure du câble, la came étant apte à se déplacer en rotation contre la réaction desdits moyens de rappel élastiques sous l'effet d'une traction exercée sur l'âme intérieure du câble lors du réglage en vue de faire correspondre la course en déplacement des deux organes.

Les moyens de rappel élastiques assurent avantageusement le maintien sous tension l'âme intérieure du câble lors du déplacement en rotation de la came et permettent l'obtention d'un réglage précis.

Dans une réalisation de l'invention, la came et le support portent des dentelures respectives aptes à venir en prise l'une avec l'autre pour interdire la rotation de la came par rapport au support dans le sens d'une traction sur l'âme intérieure du câble.

Avantageusement, les moyens de rappel élastiques sont constitués par un unique ressort travaillant en torsion et en compression, apte à presser lesdites dentelures du support et de la came l'une contre l'autre, et le dispositif de réglage comporte un poussoir de déverrouillage monté à déplacement sur le support de manière à pouvoir agir sur la came à l'encontre dudit ressort pour désengager les dentelures. Le support comporte une embase portée par l'organe sur lequel le dispositif de réglage est monté, l'embase présentant un fût cylindrique pour le montage d'une pièce de retenue de la came. Cette dernière est montée à rotation autour du fût entre l'embase et la pièce de retenue, le ressort s'accroche à ses extrémités sur la pièce de retenue et sur la came. La dentelure de la came est ménagée sur sa face tournée vers la pièce de retenue et le ressort travaille en compression entre l'autre face de la came et l'embase. Avantageusement, l'embase est venue de formation par moulage avec l'organe actionneur.

Un autre objet de la présente invention est de compenser une tension excessive de l'âme intérieure du câble de commande dans le cas où l'organe récepteur atteint sa position de fin de course avant l'organe actionneur.

La présente invention y parvient par le fait que le dispositif de réglage automatique comporte en outre une couronne reliée à rotation unidirectionnelle audit support, par le fait que la came est montée à rotation sur le support entre deux butées angulaires définies par la couronne et par le fait que les moyens de rappel élastiques agissent sur la came pour exercer un couple de rappel tendant à la rappeler en rotation vers l'une des butées angulaires de la couronne, dans le sens opposé au sens de rotation de cette dernière et dans le sens d'une traction sur l'âme intérieure du câble, la came étant apte à atteindre l'autre butée angulaire contre la réaction desdits moyens de rappel élastiques sous l'effet d'une traction exercée sur l'âme intérieure du câble lors du réglage pour entraîner en rotation la couronne en vue de faire correspondre la course en déplacement des deux organes. Dans cette réalisation de l'invention, lesdits moyens de rappel élastiques sont de préférence constitués par un ressort hélicoïdal dont les extrémités sont solidaires de la came et du support respectivement. La course en rotation de la came entre lesdites butées angulaires correspond avantageusement à un déplacement compris entre 3 et 5 mm de l'âme intérieure de câble dans la gaine. Ledit support comporte une surface annulaire présentant une dentelure et prolongée en son centre par une tige sur laquelle la couronne est montée à rotation, cette dernière présentant sur une face frontale une dentelure destinée à contacter ladite surface annulaire. Le dispositif comporte un ressort de compression apte à presser les deux dentelures de façon à obtenir une possibilité de rotation unidirectionnelle de la couronne. La couronne comporte, sur sa face frontale opposée à celle comprenant la dentelure, une encoche présentant deux surfaces radiales définissant lesdites butées angulaires et la couronne est reçue dans une gorge annulaire de la came dont le fond présente une protubérance destinée à s'engager dans ladite encoche et adaptée à venir, lors du mouvement de rotation de la came, en butée contre l'une desdites surfaces radiales de l'encoche. La came comporte un corps tubulaire alésé intérieurement de façon étagée pour définir un épaulement et la came est retenue sur la tige par un disque rapporté sur la tranche d'extrémité de cette dernière, ledit ressort de compression s'interposant axialement entre ledit épaulement et le disque. Ledit ressort hélicoïdal est enroulé sur le corps tubulaire de la came et fixé à ses extrémités respectivement sur une face frontale de la came opposée à celle présentant ladite gorge annulaire et sur le disque.

Les dentelures sont avantageusement constituées par des dents formant à leur sommet un angle de 55°.

Les dentelures sont avantageusement pressées avec une force comprise entre 2 et 4 daN, de préférence 3 daN.

D'autres caractéristiques et avantages de la présente invention apparaîtront à la lecture de la description détaillée qui va suivre, d'exemples de réalisation non limitatifs de l'invention et à l'examen du dessin annexé sur lequel :
- la figure 1 est une vue éclatée d'une première réalisation de dispositif de réglage automatique selon l'invention,
- les figures 2 et 3 sont des vues montrant isolément en coupe axiale et de face le support représenté sur la figure 1,
- la figure 4 illustre un détail de réalisation de la dentelure du support représenté sur les figures 2 et 3,
- la figure 5 est une vue en coupe axiale montrant isolément la came représentée sur la figure 1,
- la figure 6 est une vue frontale de la came représentée sur la figure 5, avec arrachement partiel,
- la figure 7 est une vue de côté de la couronne représentée sur la figure 1, avec arrachement partiel,
- les figures 8 et 9 sont des vues frontales opposées de la couronne représentée sur la figure 7,
- la figure 10 illustre un détail de réalisation de la dentelure de la couronne représentée sur la figure 7,
- la figure 11 est une vue frontale du disque rapporté sur le support représenté sur les figures 2 et 3 pour retenir la came sur ce dernier,
- la figure 12 est une vue en coupe axiale du disque selon le trait de coupe XII- XII de la figure 11,
- la figure 13 est une vue schématique en coupe axiale du dispositif représenté sur la figure 1, assemblé,
- les figures 14 à 17 illustrent le fonctionnement de la première réalisation du dispositif de réglage automatique, lors de la pose dans un véhicule automobile d'un câble de commande reliant le levier d'accélérateur au mécanisme de commande d'admission des gaz,
- la figure 18 représente un levier de pédale d'accélérateur en matière plastique présentant une embase venue de formation avec la pédale pour le montage d'un dispositif de réglage conforme à un deuxième exemple de réalisation de l'invention,
- la figure 19 est une vue selon la flèche XIX de la figure 18, du levier équipé du dispositif de réglage,
- la figure 20 est une vue éclatée du dispositif de réglage conforme au deuxième exemple de réalisation de l'invention,
- la figure 21 montre le dispositif de réglage représenté sur la figure 20, assemblé,
- les figures 22A et 22B sont des vues selon la flèche XXII de la figure 21 montrant les deux positions extrêmes de la came relativement au support,
- la figure 23 représente isolément, en perspective, la came,
- la figure 24 est une vue de face de la came vue dans la direction de l'axe de rotation de cette dernière, et
- la figure 25 est une vue en coupe selon le trait de coupe XXV-XXV de la figure 24.

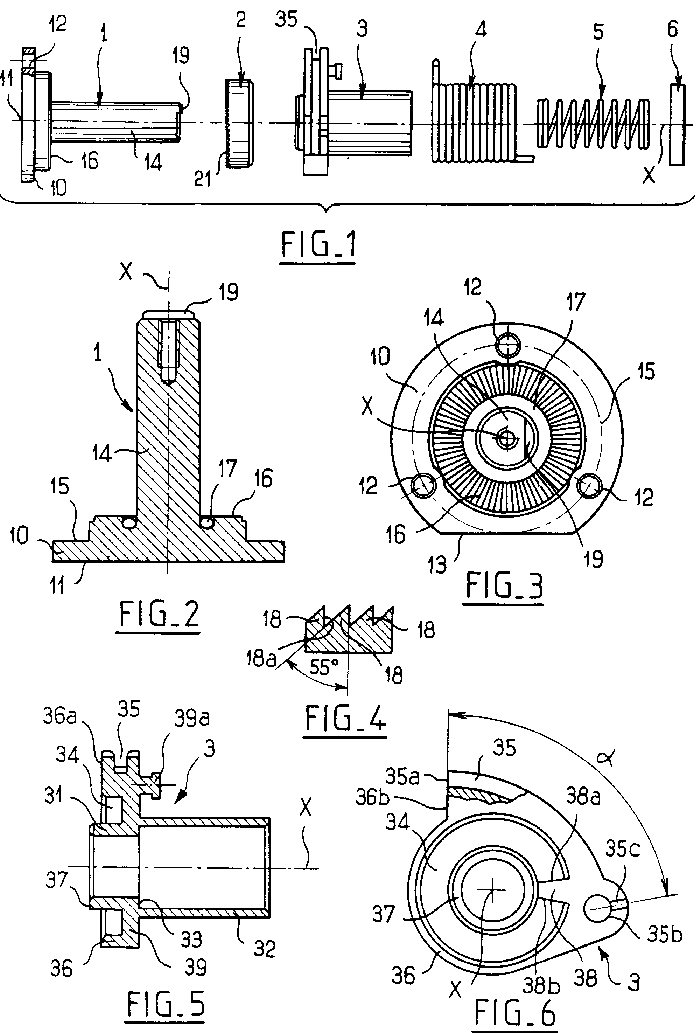

On a représenté sur la vue éclatée de la figure 1 les principaux éléments constitutifs d'un dispositif de réglage automatique conforme à un premier mode de réalisation de l'invention. Dans la suite de la description, les termes arrière et avant se réfèreront à des parties de ces éléments respectivement situées à gauche et à droite sur cette figure.

Conformément à l'invention, le dispositif de réglage automatique comporte un support 1 à fixer à l'un des organes actionneur et récepteur. Dans l'exemple de réalisation décrit il s'agit de l'organe actionneur. Bien entendu on pourrait proposer de monter le dispositif de réglage automatique sur l'organe récepteur sans sortir du cadre de la présente invention. Le support 1, représenté isolément en coupe axiale sur la figure 2 et en vue frontale sur la figure 3, comporte une embase 10 de forme discoïde présentant une face frontale arrière plane 11 destinée à reposer sur un socle de forme complémentaire de l'organe actionneur. L'embase 10 est fixée sur le socle précité au moyen de boulons non représentés engagés dans trois alésages 12, d'axes parallèles entre eux et perpendiculaires au plan de la face frontale 11, traversant l'embase et équirépartis angulairement sur un cercle centré sur un axe X perpendiculaire au plan de la face 11. L'axe X est contenu dans le plan de coupe de la figure 2. Ces alésages 12 sont proches du bord extérieur de l'embase 10.

L'embase 10 est prolongée en son centre, selon l'axe X, et sur sa face frontale avant 15, plane et perpendiculaire à l'axe X, par une tige 14 cylindrique de révolution autour de l'axe X. La tige 14 se raccorde de façon étagée sur la face frontale 15 pour former une surface annulaire 16 s'étendant généralement perpendiculairement à l'axe X en avant de la face frontale 15. Une gorge annulaire 17 symétrique de révolution autour de l'axe X est formée au pied de la tige 14 et cette gorge 17 présente une profondeur correspondant sensiblement à la moitié de la distance, mesurée selon l'axe X, entre la surface annulaire 16 et le plan de la surface frontale 15. Le bord radialement externe de la surface annulaire 16 se situe suffisamment en retrait du bord extérieur de l'embase 10 pour ménager l'espace nécessaire sur la face frontale 15 à l'appui des têtes des boulons utilisés pour la fixation de l'embase 10 sur le socle de l'organe actionneur.

Une dentelure est formée sur la surface annulaire 16 et chaque dent 18 de celle-ci est définie par la réunion de deux surfaces planes s'étendant généralement radialement autour de l'axe X en formant entre elles, au sommet de la dent, un angle aigu de 55°, comme représenté sur la figure 4. L'une de ces surfaces planes, référencée 18a, s'étend parallèlement à l'axe X.

La tranche d'extrémité libre de la tige 14 est taraudée selon l'axe X pour accueillir une vis de fixation d'un disque 6 rapporté sur la tranche de tige 14, comme cela sera précisé dans la suite. Cette dernière comporte par ailleurs un ergot 19 formant saillie sur celle-ci, destiné à s'engager dans un logement de forme complémentaire 61 prévu sur le disque 6 pour garantir la position en rotation autour de l'axe X de ce dernier lorsqu'il est fixé sur la tige 14.

Conformément à l'invention, une came 3 est montée à rotation autour de l'axe X sur la tige 14. Cette came 3 comporte un corps de forme générale tubulaire, alésé intérieurement selon l'axe X de façon étagée pour définir un épaulement 33 s'étendant perpendiculairement à l'axe X, délimitant axialement une paroi 31 s'étendant en arrière de l'épaulement 33 et une paroi 32 s'étendant en avant du plan de l'épaulement 33. La paroi 31 présente une surface radialement interne cylindrique de révolution autour de l'axe X, de diamètre très légèrement supérieur au diamètre de la tige 14 de façon à guider en rotation la came 3 sur la tige 14. La paroi 32 présente une surface radialement interne cylindrique de révolution autour de l'axe X, de diamètre nettement supérieur au diamètre de la tige 14. La paroi 31 se prolonge radialement vers l'extérieur, tangentiellement au plan contenant l'épaulement 33 pour former une collerette 39 s'étendant perpendiculairement à l'axe X. La collerette 39 se raccorde sur sa périphérie à une jupe 36 s'étendant autour de l'axe X parallèlement à ce dernier et vers l'arrière. La jupe 36 est élargie radialement, comme représenté sur la figure 6, sur un secteur angulaire de 180° environ pour former une épaisseur de matière dans le flanc radial externe de laquelle est ménagée une gorge 35 ouverte radialement vers l'extérieur, formant surface de came et destinée à guider l'âme intérieure du câble de commande. La surface radialement interne de la jupe 36 est cylindrique de révolution autour de l'axe X et délimite, avec la surface radialement externe de la paroi 31 s'étendant en arrière de la collerette 39, une gorge annulaire 34 présentant en section axiale une forme en U, ouverte vers l'arrière. L'extrémité arrière 36a de la jupe 36 s'étend dans un plan perpendiculaire à l'axe X et l'extrémité arrière 37 de la paroi 31 s'étend dans un plan perpendiculaire à l'axe X, en arrière de l'extrémité arrière 36a de la jupe 36.

La gorge 35 s'étend angulairement sur un angle a égal à 80° environ, débouche à une extrémité 35a sur un décrochement 36b formé par la jupe 36 et à l'autre extrémité dans un logement 35b prévu pour recevoir un embout d'accrochage solidaire d'une extrémité de l'âme intérieure du câble. Ce logement 35b présente une forme complémentaire de celle de l'embout d'accrochage, ici cylindrique de révolution autour d'un axe parallèle à l'axe X et la jupe 36 est découpée parallèlement à l'axe X vers l'extérieur en 35c pour permettre le passage de l'âme intérieure du câble lors du montage de l'embout d'accrochage dans le logement 35b.

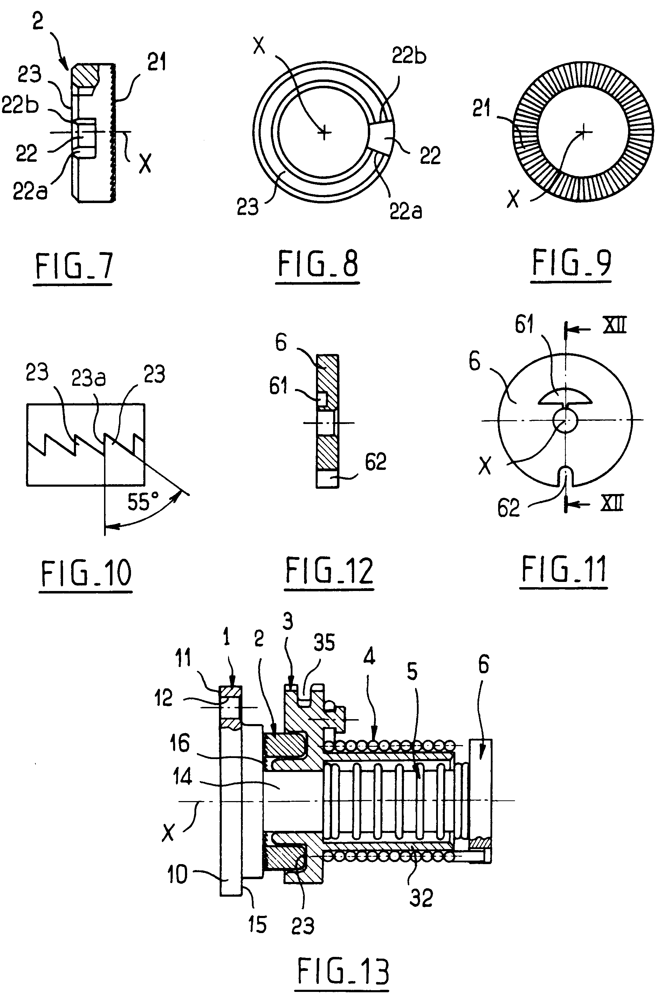

La gorge annulaire 34 est destinée à recevoir une couronne 2 reliée à rotation unidirectionnelle au support 1. Plus particulièrement, cette couronne 2 présente en général la forme d'un tore de révolution autour de l'axe X, dont la section axiale est rectangulaire, de grand côté parallèle à l'axe X et de longueur supérieure à la distance, mesurée selon l'axe X, entre le fond de la gorge 34 et l'extrémité arrière 37 de la paroi 31. La couronne 2 présente sur sa face frontale arrière 21 une dentelure destinée à coopérer avec la dentelure de la surface annulaire 16 du support 1 pour interdire la rotation dans un sens donné de la couronne 2 par rapport au support 1, autour de l'axe X, et autoriser la rotation, avec frottement, dans l'autre sens. Cette dentelure est constituée comme représenté sur les figures 9 et 10 par des dents 23 définies chacune par la réunion de deux surfaces planes s'étendant généralement radialement autour de l'axe X et faisant entre elles un angle aigu de 55° au sommet de la dent. L'une de ces surfaces planes, référencée 23a, s'étend parallèlement à l'axe X. La couronne 2 présente sur sa face frontale avant 23 opposée à la face frontale arrière 21 une encoche 22 dont la profondeur correspond à la moitié environ de l'épaisseur de la couronne, mesurée selon l'axe X. L'encoche 22 est délimitée angulairement par des surfaces planes 22a et 22b s'étendant radialement en formant entre elles un secteur angulaire de 35° environ autour de l'axe X. Cette encoche 22 est destinée à recevoir une protubérance 38 ménagée dans le fond de la gorge 34 de la came 3. Cette protubérance 38 est délimitée angulairement par des surfaces planes 38a et 38b s'étendant radialement en formant entre elles un secteur angulaire de 25° environ autour de l'axe X. La came 3 est ainsi limitée angulairement en rotation autour de l'axe X par la couronne 2 sur une course de 10° environ, par butée des surfaces 38a et 38b de la protubérance 38 contre les surfaces 22a et 22b de l'encoche 22 respectivement.

La came 3 est retenue axialement sur la tige 14 par le disque 6 précité. Ce dernier est percé en son centre pour le passage de la vis de fixation sur la tige 14 et présente un diamètre supérieur au diamètre de la tige 14. Un ressort hélicoïdal de compression 5 s'étendant selon l'axe X est monté dans l'espace annulaire formé entre la surface externe de la tige 14 et la surface radialement interne de la paroi 32 pour s'interposer axialement entre l'épaulement 33 et la face du disque 6 par laquelle celui-ci est rapporté sur la tranche d'extrémité de la tige 14, de sorte que la came 3 presse la dentelure de la couronne 2 contre celle du support 1.

Des moyens de rappel élastiques, constitués dans l'exemple de réalisation décrit par un ressort 4 hélicoïdal d'axe X enroulé sur la paroi 32 et accroché à ses extrémités respectivement à la came 3 et au disque 6, agissent sur la came 3 pour exercer sur cette dernière un couple de rappel tendant à la rappeler en rotation dans le sens d'une traction sur l'âme intérieure du câble, comme cela sera vu dans la suite. Le ressort 4 s'accroche à son extrémité arrière, formant crochet, sur un téton 39a prévu en saillie sur la face frontale avant de la partie élargie de la jupe 36 et s'engage par son extrémité avant, s'étendant parallèlement à l'axe X, dans une encoche 62 ménagée sur la tranche du disque 6.

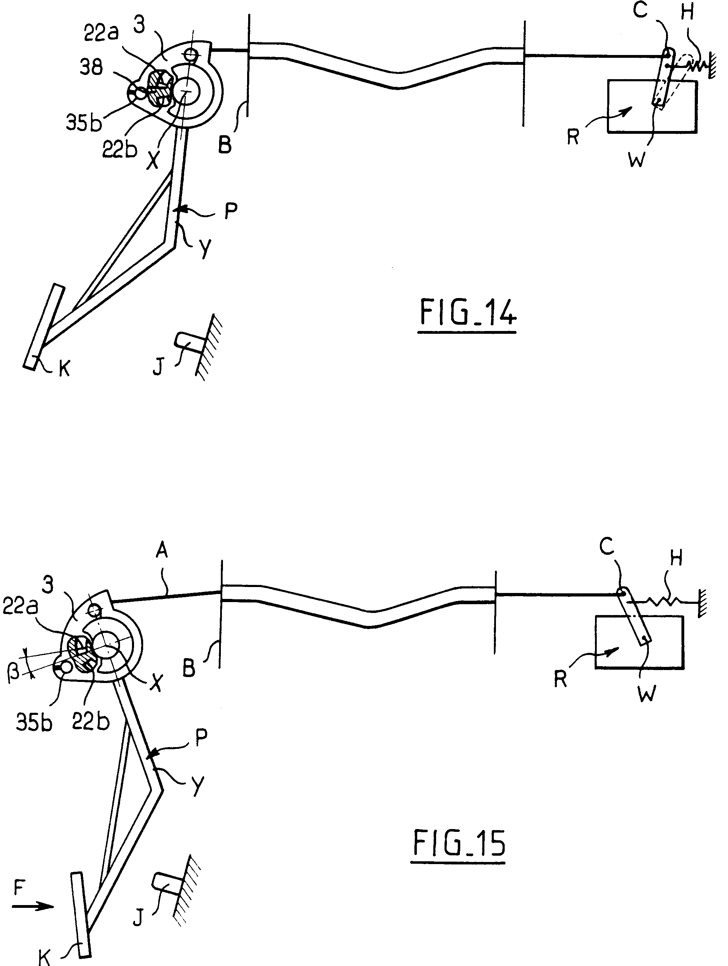

Le fonctionnement du premier exemple de réalisation du dispositif de réglage automatique va maintenant être décrit en référence aux figures 14 à 17. On a désigné par la référence R sur ces figures un mécanisme de commande d'admission des gaz d'un véhicule automobile, comprenant un bras de commande C articulé autour d'un axe W, porté par le bâti, perpendiculaire au plan des figures 14 à 17 et que l'on cherche à actionner à distance au moyen d'un câble de commande relié à un levier d'accélérateur référencé P. Ce levier d'accélérateur P, articulé autour d'un axe Y, porté par le bâti, s'étendant perpendiculairement au plan des figures 14 à 17, est muni à une extrémité d'une pédale K et à l'autre extrémité d'un socle destiné à recevoir un dispositif de réglage automatique conforme à l'invention, avec l'axe X orienté parallèlement à l'axe Y. Le levier P est limité angulairement en rotation autour de l'axe Y par une butée haute non représentée et par une butée basse J. Les extrémités de l'âme intérieure A du câble de commande sont accrochées respectivement à la came 3 et au bras de commande C. Des moyens de rappel élastiques H représentés schématiquement agissent sur le bras de commande C pour exercer sur ce dernier un couple de rappel tendant à le rappeler en position d'admission minimale des gaz, c'est-à-dire en rotation autour de l'axe W vers la droite sur les figures 14 à 17. L'âme intérieure A coulisse à l'intérieur d'une gaine G fixée à ses extrémités au bâti B du véhicule.

On a représenté sur la figure 14 le levier P rappelé en position de butée haute par la traction exercée sur l'âme intérieure A par les moyens de rappel élastiques H agissant sur le bras de commande C. Le réglage du câble de commande vise à faire coïncider la position de butée haute du levier P avec la position extrême du bras de commande représentée en pointillés sur la figure 14, correspondant à l'admission minimum des gaz. La longueur de l'âme intérieure A du câble est choisie suffisamment courte pour qu'en position de butée haute du levier P le bras de commande C n'atteigne pas, lors du montage du câble, sa position extrême représentée en pointillés. Le couple exercé par les moyens de rappel élastiques H sur la came 3 dans le sens horaire sur les figures est inférieur au couple exercé par le ressort 4 dans le sens anti-horaire de sorte que la came 3 reste rappelée par ce dernier en butée angulaire, par appui de la surface 38b de la protubérance 38 contre la surface 22b de l'encoche 22. Les dentelures de la couronne 2 viennent en prise, sous l'action du ressort de compression 5, sur la dentelure du support 1 pour empêcher la couronne de tourner dans le sens anti-horaire lorsque la came 3 vient en butée contre la surface 22b de l'encoche 22.

L'opérateur effectuant le réglage appuie sur la pédale K avec une force F suffisante pour faire pivoter le levier P autour de l'axe Y dans le sens anti-horaire et tirer sur l'âme intérieure A. Cette traction sur l'âme intérieure A provoque le déplacement vers la gauche sur la figure 15 du bras de commande C contre la réaction des moyens de rappel élastiques H, dans le sens d'une augmentation des gaz, jusqu'à ce que le bras de commande C atteigne sa position extrême correspondant à l'admission maximum des gaz, c'est-à-dire la position qu'a le bras de commande C sur les figures 15 à 17. Le bras de commande C atteint cette position avant que le levier P n'ait atteint sa position de butée basse. Le ressort 4 présente une raideur suffisante pour que la came 3 reste en butée contre la surface 22b de l'encoche 22 durant cette opération.

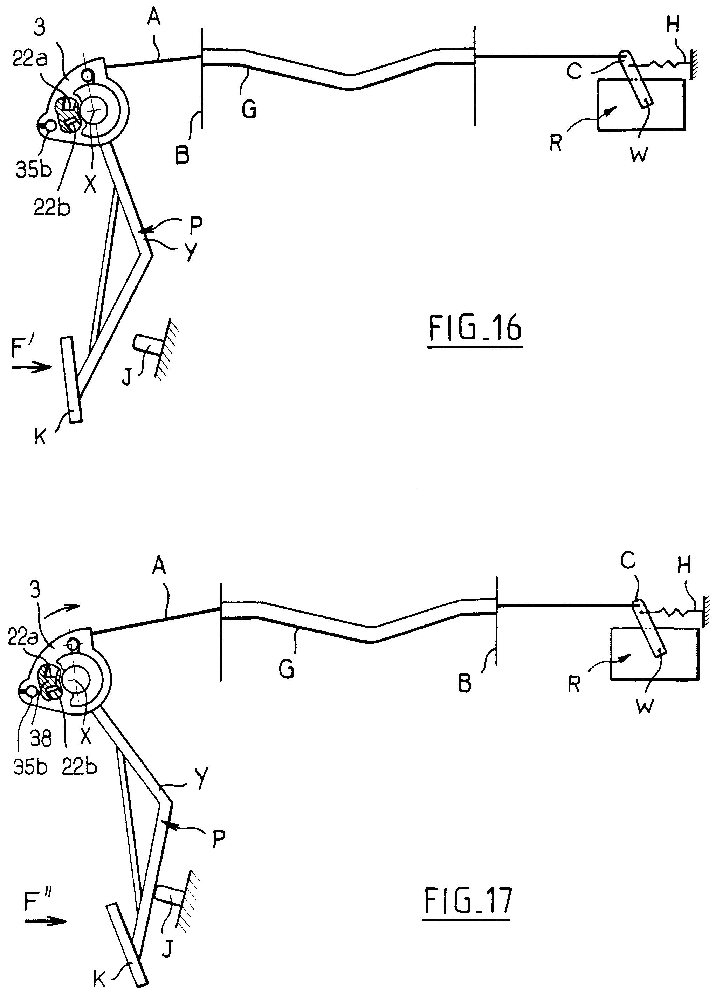

L'opérateur appuie ensuite avec une force F' plus grande que la force F sur le levier P pour déplacer celui-ci en rotation dans le sens anti-horaire et tirer davantage sur l'âme intérieure A du câble. Ce déplacement du levier P dans le sens anti-horaire s'effectue contre la réaction du ressort 4 et la came 3 pivote dans le sens horaire par rapport à sa tige support 14 jusqu'à venir en butée contre la couronne 2, après une course en rotation d'un angle β égal à 10° environ, par appui de la surface 38a de la protubérance 38 contre la surface 22a de l'encoche 22, comme représenté sur la figure 16.

Le levier P n'a toujours pas atteint sa position de butée basse. L'opérateur appuie alors davantage encore sur le levier P avec une force F" supérieure à F' pour vaincre le frottement de la dentelure de la couronne 2 sur la dentelure du support 1 et provoquer la rotation unidirectionnelle de cette dernière autour de l'axe X, dans le sens horaire, jusqu'à ce que le levier P atteigne sa position de butée basse comme représenté sur la figure 17. Le réglage du câble de commande est alors terminé. Ce réglage s'est effectué de façon entièrement automatique et ne nécessite pas de rapporter ensuite un organe de verrouillage comme cela était le cas des dispositifs antérieurement connus. Après réglage, le ressort 4 exerce une action, dite de compensation, à l'approche de la position de butée basse du levier P pour compenser une tension excessive exercée sur le câble de commande lorsque le bras de commande C atteint sa position extrême correspondant à l'admission maximum des gaz avant que le levier P n'ait atteint sa position de butée basse. Le ressort 4 permet également d'assurer que l'on atteint, en position de butée basse du levier P, la position extrême du bras de commande C correspondant à l'admission maximale des gaz et en position de butée haute du levier P, la position extrême du bras de commande C correspondant à l'admission minimale des gaz. De préférence, le support 1, la couronne 2 et la came 3 sont réalisés par moulage en matière plastique.

La présente invention n'est pas limitée à ce premier exemple de réalisation décrit. On peut notamment proposer un autre montage du ressort 4 dans lequel celui-ci s'étendrait par exemple selon un axe transversal à l'axe X pour rappeler la came en rotation dans le sens d'une traction de l'âme intérieure du câble A.

Le mode de réalisation de l'invention qui vient d'être décrit correspond au montage à rotation de la came entre deux butées angulaires d'une couronne reliée à rotation unidirectionnelle au support, ce qui permet d'exercer une action de compensation.

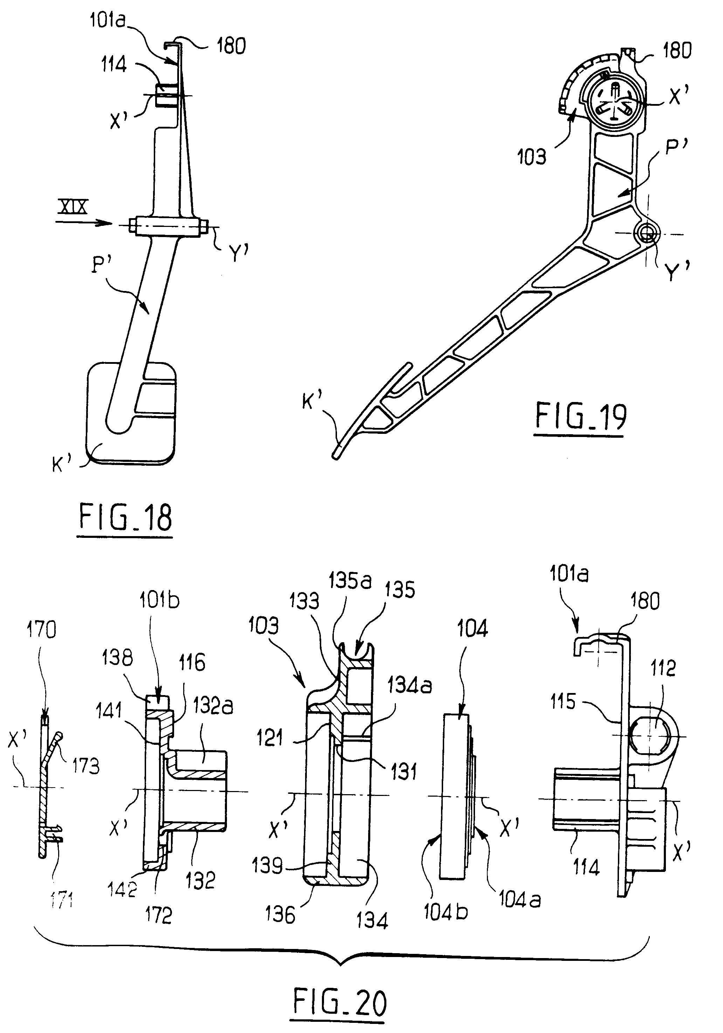

On a représenté sur les figures 18 à 25 un deuxième exemple de réalisation du dispositif de réglage conforme à l'invention.

Dans cette deuxième réalisation de l'invention, on réalise directement une dentelure sur la came, adaptée à contacter la dentelure du support. Dans ce cas, la possibilité de déplacement en rotation de la came par rapport au support est pratiquement nulle dans le sens d'une traction exercée sur le câble de commande.

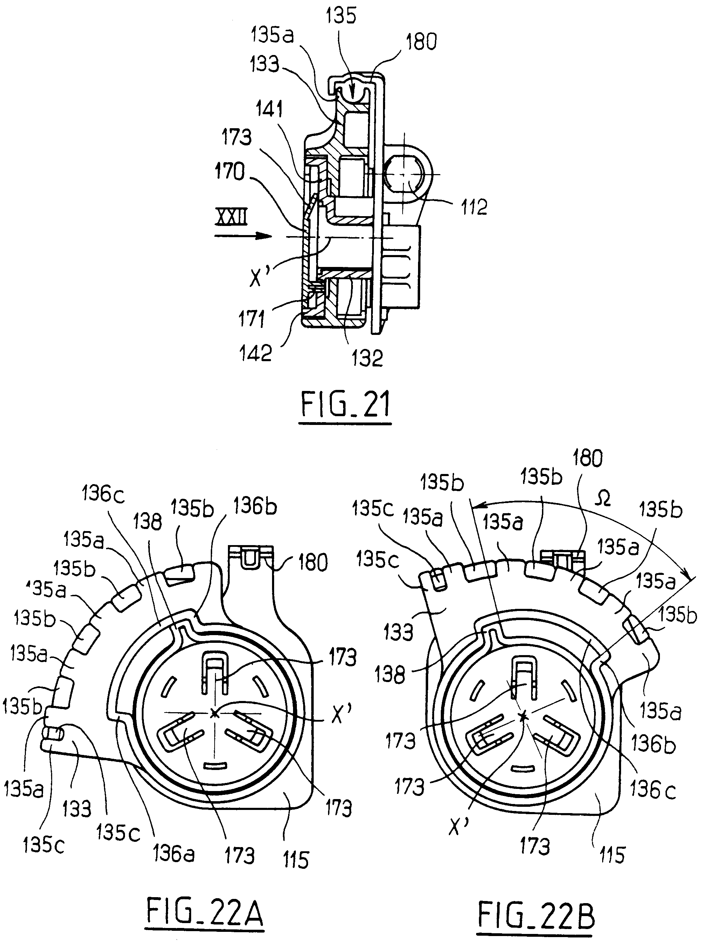

Le support comporte une embase 101a portée par l'organe actionneur, c'est-à-dire le levier de pédale dans l'exemple décrit, et une pièce de retenue 101b rapportée sur l'embase 101a. L'embase 101a peut être venue de formation par moulage en matière plastique avec l'organe actionneur comme représenté sur la figure 18 ou être rapportée par boulonnage ou rivetage sur l'organe actionneur, ce qui correspond à la variante de réalisation représentée sur les figures 20 et 21.

L'organe actionneur est constitué dans l'exemple décrit par un levier P' de pédale d'accélérateur monté à rotation autour d'un axe Y', sur une structure de palonnier. Il est équipé à une extrémité d'une pédale K' et à l'autre extrémité de l'embase 101a. Cette dernière comporte un fût cylindrique 114 d'axe X' parallèle à l'axe Y' pour le montage à rotation autour de l'axe X' d'une came 103 destinée à l'accrochage d'une extrémité de l'âme intérieure du câble de commande.

L'embase 101a représentée sur la figure 20 présente, du côté opposé au fût 114, un perçage 112 d'axe perpendiculaire à l'axe X' pour le montage de l'embase sur le levier P' par tout moyen approprié (boulonnage, rivetage) connu de l'homme de métier. Le fût 114 se raccorde à sa base sur une paroi plane 115 de l'embase 101a, s'étendant perpendiculairement à l'axe X' et destinée à servir d'appui à une face frontale 104a d'un ressort à lame 104, présentant des spires d'axe X' décalées axialement selon cet axe de manière à travailler en compression et en torsion. L'autre face frontale 104b du ressort 104 vient au contact du fond d'un logement 134 ménagé sur la came 103, pour pousser cette dernière contre la pièce de retenue 101b.

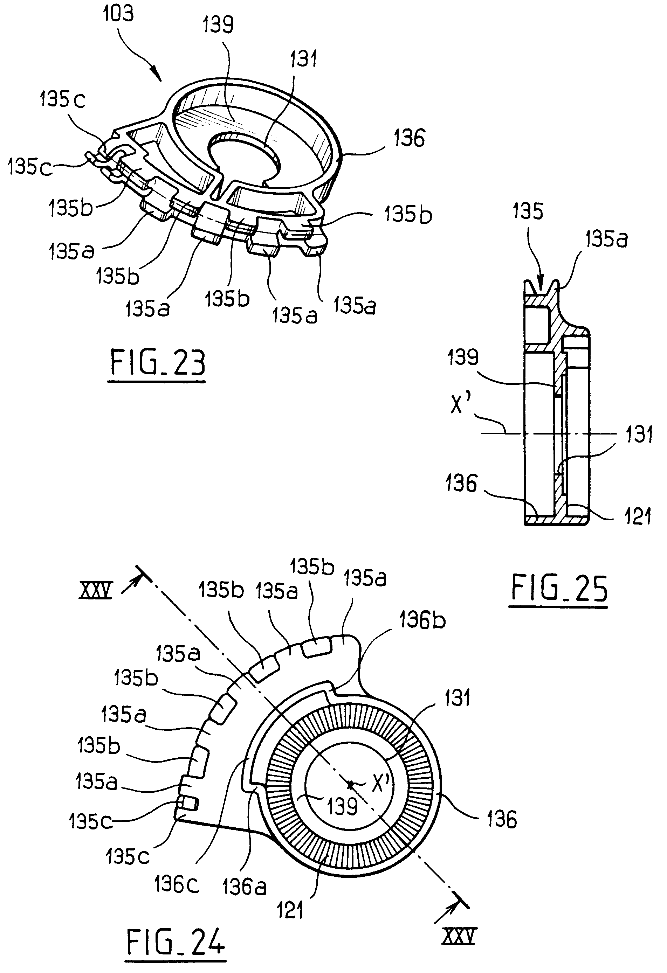

La came 103, représentée plus particulièrement sur les figures 23 à 25, comporte une paroi 136 généralement cylindrique de révolution autour de l'axe X', munie sur sa face radialement interne d'une nervure annulaire 139 s'étendant radialement vers l'intérieur.

Une face de la nervure annulaire 139 forme le fond du logement 134 précité et sert d'appui axial au ressort 104 tandis que la face opposée présente une dentelure 121 destinée à venir au contact d'une dentelure 116 de la pièce de retenue 101b. La nervure annulaire 139 délimite par son bord radialement interne une ouverture circulaire centrée sur l'axe X' pour le passage d'un fourreau 132 de la pièce de retenue 101b, s'étendant en avant de la paroi transversale de la pièce de retenue portant la dentelure 116 et destiné à s'emmancher à force sur le fût 114, sans possibilité de rotation autour de l'axe X'. Le fourreau 132 se raccorde sur une paroi transversale 141 de la pièce de retenue 101b, s'étendant généralement perpendiculairement à l'axe X'.

Le fût 114 est muni d'une languette élastique non représentée dans un souci de clarté du dessin, apte à se déformer élastiquement lors du montage du fourreau 132 sur le fût 114 pour venir, au terme de ce montage, en reprenant sa forme initiale, en prise avec un épaulement interne du fourreau et retenir de façon indémontable la pièce de retenue 101b sur l'embase 101a.

Le ressort 104 s'accroche, à son extrémité radialement la plus externe dans un évidement 134a ménagé à cet effet sur la paroi cylindrique du logement 134 et à son extrémité radialement la plus interne dans un évidement 132a ménagé sur la paroi cylindrique du fourreau 132.

La paroi 136 de la came 103 se prolonge radialement vers l'extérieur, sur un secteur angulaire de 90° environ de sa périphérie, par un voile 133 s'étendant généralement perpendiculairement à l'axe X'. Le voile 133 comporte à sa périphérie une gorge de guidage 135 de l'âme intérieure du câble formée entre des dents 135a et 135b disposées de part et d'autre d'un plan médian de la gorge de guidage et en alternance. La gorge de guidage 135 s'étend généralement selon un arc de cercle centré sur l'axe X' et elle présente à une extrémité des dents 135c conformées pour l'accrochage d'un embout d'extrémité de l'âme intérieure du câble. La paroi 115 de l'embase 101a se prolonge dans l'axe du levier, comme représenté sur la figure 19, pour former un crochet 180 recourbé vers le fût 114 et destiné à maintenir l'âme du câble dans la gorge 135 lorsque ce dernier est relâché, avant son montage par exemple.

Un poussoir de déverrouillage 170 est rapporté avec une possibilité de déplacement sur la pièce de retenue 101b pour pouvoir agir sur la came 103 et désengager les dentelures 116 et 121 lorsque l'on désire démonter le câble de commande ou effectuer un nouveau réglage. Le poussoir de commande 170 comporte des pieds d'encliquetage 171 destinés à s'engager dans des ouvertures respectives 172 pratiquées sur la paroi transversale de la pièce de retenue 101b. Trois languettes élastiques 173 s'étendant obliquement et radialement vers l'extérieur autour de l'axe X' exercent une action tendant à éloigner le poussoir 170 de la pièce de retenue 101b, de sorte que lorsqu'aucune pression n'est exercée sur le poussoir 170, les extrémité libres des pieds d'encliquetage 171 n'appuient pas sur la came 103, comme représenté sur la figure 21. Le bord radialement externe de la paroi transversale 141 de la pièce de retenue 101b se raccorde sur une paroi cylindrique 142 formant un logement pour recevoir le poussoir 170.

Les dentelures 116 et 121 présentent une forme telle que décrit précédemment en référence à la figure 4 et sont conformées de manière à s'opposer, lorsque pressées au contact l'une de l'autre par le ressort 104, à une rotation de la came 103 autour du fourreau 132 dans le sens anti-horaire sur les figures 22A et 22B, c'est-à-dire dans le sens d'une traction sur l'âme du câble de commande.

La course en rotation de la came 103 est limitée par des moyens de butée constitués par une saillie 138 s'étendant radialement vers l'extérieur, formée sur la pièce de retenue 101b, et par des faces 136a et 136b s'étendant radialement, agencées de manière à permettre une course angulaire Ω de 65° de la saillie 138. Les faces 136a et 136b sont définies par des nervures situées sur le voile 133 à l'opposé de l'embase 101a et sont réunies par une nervure 136c s'étendant selon un arc de cercle centré sur l'axe X'.

Le dispositif de réglage automatique conforme à l'exemple de réalisation des figures 18 à 25 s'utilise de la façon suivante.

Après mise en place de l'embase 101a sur le levier, dans le cas où celle-ci est rapportée sur ce dernier avec le dispositif déjà assemblé, ou après assemblage du dispositif sur l'embase 101a dans le cas où celle-ci est venue de formation avec le levier, la came 103 est positionnée prête au réglage comme représenté sur la figure 22A par action le cas échéant sur le poussoir 170, la saillie 138 venant en butée contre la face 136b.

Après accrochage des embouts d'extrémité de l'âme du câble de commande, l'opérateur chargé du montage appuie sur la pédale K' comme expliqué précédemment en référence aux figures 14 à 17.

Lors de cette action, le bras C vient en butée puis les dentelures 121 de la came 103 glissent sur les dentelures 116 de la pièce de retenue, à l'encontre du couple exercé par le ressort 104 sur la came 103, jusqu'à ce que le levier K' atteigne la butée J. Le réglage est alors effectué automatiquement, comme décrit précédemment en référence à la figure 17. La position de butée basse du levier P' correspond à la position d'admission maximale des gaz.

Ensuite, lorsque l'opérateur relâche la pédale K', le ressort 104 maintient les deux dentelures 116 et 121 en prise. A cet effet, la constante de raideur du ressort 104 est choisie de manière que le couple exercé par le ressort 104 sur la came 103 autour de l'axe X' soit supérieur au couple en sens inverse exercé par l'âme intérieure du câble sous l'action du ressort de rappel H.

En cas d'intervention sur le câble pour son remplacement par exemple, une pression exercée sur le poussoir 170 permet de déplacer, par appui des extrémités libres des pieds d'encliquetage 171 sur la came 103, cette dernière à l'encontre du ressort 104 selon l'axe X' en direction de l'embase 101a, afin de désengager les dentelures 116 et 121. La came 103 effectue alors sous l'action de rappel du ressort 104 un mouvement de rotation l'amenant dans sa position initiale de réglage représentée sur la figure 22A.

Bien entendu, on peut monter, sans sortir du cadre de l'invention, le deuxième exemple de réalisation qui vient d'être décrit sur l'organe récepteur.

## Revendications

**1/** Dispositif de réglage automatique pour câble de commande comprenant une gaine extérieure de câble (G) à fixer à ses extrémités à un bâti et une âme intérieure (A) apte à coulisser à l'intérieur de ladite gaine, à relier à l'une de ses extrémités à un organe actionneur (P) monté à déplacement par rapport au bâti et à l'autre extrémité à un organe récepteur (R) monté à déplacement par rapport au bâti et que l'on désire commander à distance, caractérisé en ce que le dispositif de réglage automatique comporte:
- un support (1; 101a, 101b) solidaire de l'un des organes,
- une came (3 ; 103) destinée à l'accrochage d'une extrémité de l'âme intérieure du câble et reliée à rotation audit support, avec une possibilité réduite de déplacement en rotation dans le sens d'une traction de l'âme intérieure du câble,
- des moyens de rappel élastiques (4 ; 104) agissant sur la came (3 ; 103) pour exercer un couple de rappel tendant à rappeler en rotation la came dans le sens d'une traction sur l'âme intérieure du câble, la came (3 103) étant apte à se déplacer en rotation contre la réaction desdits moyens de rappel élastiques (4 ; 104) sous l'effet d'une traction exercée sur l'âme intérieure du câble lors du réglage en vue de faire correspondre la course en déplacement des deux organes.

**2/** Dispositif de réglage automatique selon la revendication 1, caractérisé en ce que la came (103) et le support (101a, 101b) portent des dentelures (121 ; 116) respectives aptes à venir en prise l'une avec l'autre pour interdire la rotation de la came (103) par rapport au support (101a, 101b) dans le sens d'une traction sur l'âme intérieure du câble.

**3/** Dispositif de réglage automatique selon la revendication 2, caractérisé en ce que les moyens de rappel élastiques sont constitués par un ressort unique (104) travaillant en torsion et en compression, apte à presser lesdites dentelures du support et de la came l'une contre l'autre, et en ce que le dispositif de réglage comporte un poussoir de déverrouillage (170) monté à déplacement sur le support et apte à agir sur la came à l'encontre dudit ressort pour désengager les dentelures.

**4/** Dispositif de réglage automatique selon la revendication 3, caractérisé en ce que le support comporte une embase (101a) portée par l'organe actionneur (P'), présentant un fût cylindrique (114) pour le montage d'une pièce de retenue (101b), en ce que la came (103) est montée à rotation autour du fût (114) entre l'embase (101a) et la pièce de retenue (101b), en ce que le ressort (104) s'accroche à ses extrémités sur la pièce de retenue et sur la came, la dentelure (116) de la came étant formée sur la face de celle-ci tournée vers la pièce de retenue (101b), le ressort (104) travaillant en compression entre l'autre face de la came (103) et l'embase (101a).

**5/** Dispositif de réglage automatique selon la revendication 4, l'organe actionneur étant réalisé en matière plastique, caractérisé en ce que l'embase (101a) est venue de formation par moulage avec l'organe actionneur.

**6/** Dispositif de réglage automatique selon la revendication 1, caractérisé en ce qu'il comporte en outre une couronne (2) reliée à rotation unidirectionnelle audit support, en ce que la came (3) est montée à rotation sur le support entre deux butées angulaires (22a, 22b) définies par la couronne, et en ce que lesdits moyens de rappel élastiques (4) agissent sur la came pour exercer un couple de rappel tendant à la rappeler en rotation vers l'une (22b) des butées angulaires de la couronne, dans le sens opposé au sens de rotation de cette dernière et dans le sens d'une traction sur l'âme intérieure du câble, la came étant apte à atteindre l'autre (22a) butée angulaire contre la réaction desdits moyens de rappel élastiques sous l'effet d'une traction exercée sur l'âme intérieure du câble lors du réglage pour entraîner en rotation la couronne en vue de faire correspondre la course en déplacement des deux organes.

**7/** Dispositif de réglage automatique selon la revendication 6, caractérisé en ce que lesdits moyens de rappel élastiques (4) sont constitués par un ressort hélicoïdal dont les extrémités sont solidaires de la came et du support respectivement, en ce que ledit support (1) comporte une surface annulaire (16) présentant une dentelure et prolongée en son centre par une tige (14) sur laquelle la couronne (2) est montée à rotation, cette dernière présentant sur une face frontale (21) une dentelure destinée à contacter ladite surface annulaire (16), et en ce que le dispositif comporte un ressort de compression (5) apte à presser les deux dentelures de façon à obtenir une possibilité de rotation unidirectionnelle de la couronne.

**8/** Dispositif de réglage automatique selon la revendication 7, caractérisé en ce que la couronne comporte sur sa face frontale opposée à celle (21) comprenant la dentelure, une encoche (22) présentant deux surfaces radiales définissant lesdites butées angulaires, et en ce que la couronne (2) est reçue dans une gorge annulaire (34) de la came dont le fond présente une protubérance (38) destinée à s'engager dans ladite encoche (22) et adaptée à venir, lors du mouvement de rotation de la came, en butée contre l'une desdites surfaces radiales de l'encoche.

**9/** Dispositif de réglage automatique selon l'une des revendications 2 à 5, 7 et 8, caractérisé en ce que les dentelures sont constituées par des dents formant à leur sommet un angle de 55°.

**10/** Dispositif de réglage automatique selon l'une des revendications 2 à 5, et 7 à 9, caractérisé en ce que les dentelures sont pressées avec une force comprise entre 2 et 4 daN, de préférence 3 daN.
